Europäisches Patentamt

European Patent Office

Office européen des brevets

(19)

(11) Publication number: 0 164 832 A1

# (12) EUROPEAN PATENT APPLICATION

(21) Application number: 85302246.5

(22) Date of filing: 01.04.85

(51) Int. Cl.⁴: G 01 B 7/00

(30) Priority: 06.04.84 GB 8408960

(43) Date of publication of application:
18.12.85 Bulletin 85/51

(84) Designated Contracting States:
DE FR IT

(71) Applicant: EMHART INDUSTRIES, INC.
426 Colt Highway
Farmington Connecticut 06032(US)

(72) Inventor: Merz, Steven Gustav
Kirchbodenstrasse 61
CH-8800 Thalwil(CH)

(72) Inventor: Keller, Rene
In der Rehweid 12
CH-8907 Wettswil Zürich(CH)

(74) Representative: Drury, Peter Lawrence et al,
Emhart Patents Department P.O. Box 88 Ross Walk
Belgrave Leicester LE4 5BX(GB)

(54) Method of monitoring the position of an operating member.

(57) A magnet (24; 44) is mounted adjacent a detection zone (16; 36) adjacent the path of movement of a detection portion of the operating member or a detection member (20; 40) mounted thereon, the detection portion or member being made of ferromagnetic but not permanently magnetisable material and varying in cross-sectional area in the direction of movement. Magnetic flux produced by the magnet passes along separate paths through the detection zone and through a Hall sensor (18; 38). The output of the Hall sensor is utilised to determine the position as movement occurs.

Fig_1

# METHOD OF MONITORING THE POSITION
## OF AN OPERATING MEMBER

This invention is concerned with a method of monitoring the position of an operating member which makes a to-and-fro movement. Members which make to-and-fro movements are utilised in a very wide range of machines, examples of such movements being a linear movement or an oscillatory movement about an axis. In some cases, it is desirable to monitor the position of the operating member as it makes its to-and-fro movement so that information obtained by the monitoring can be used to adjust control mechanisms of the machine either automatically or by indicating the necessary adjustments to an operator of the machine. An example of a machine which involves such to-and-fro movements is a glassware forming machine of the individual section type. Glassware forming machines of the individual section type are well known and comprise a number of individual glassware forming units (known as sections) which receive gobs of molten glass from a common source and feed their output to a common conveyor. Each section has mould arrangements which are operated by oscillatory motion of shafts about central axes thereof, the shafts being connected to mould portions and also to piston and cylinder assemblies used for moving the mould portions. The shafts make an oscillatory movement about vertical axes moving in one direction to close the moulds and then in the opposite direction through the same angle to open the moulds. Each section also has an invert mechanism which is used for transferring parisons of glass from one mould of the section to another. A typical invert mechanism comprises a rack mounted on the piston rod of a piston and cylinder assembly which rack engages a gear on which a glass parison holding mechanism is mounted so that the gear is caused to turn about a horizontal axis to move the parisons through 180° about that axis. The rack, thus, makes a to-and-fro movement which is linear first in one direction to turn the gear about the axis in one direction and then in the opposite direction to turn the gear in the opposite direction. It has been recognised that it is desirable to monitor the position of the moving parts of a section of an individual section type machine so as to enable electronic control means of the machine to optimise the production processes.

There are various known methods of monitoring to-and-fro movements. For example, oscillatory movements about an axis can be monitored by means of a resolver or a shaft encoder which are turned during the movement and give an electrical output indicating the position. Linear to-and- fro movements may be monitored by means of a linear potentiometer. However, these known methods of monitoring the movements involve bulky apparatus which may not be mounted suitably in all machines and is, in any case, somewhat expensive. Furthermore, for many applications the use of such relatively complex apparatus is precluded by the hostile environment in the machine such as, for example, exists in the aforementioned individual section type glassware forming machines where the presence of hot glass creates a hostile environment. Where the part to be monitored is a gear or a rack, the monitoring can be accomplished by detecting the proximity of the teeth with a magnetic sensor, such as a Hall sensor, thereby producing a series of pulses which indicates the position and/or velocity. This method, however, is only applicable to suitably shaped parts.

It is an object of the present invention to provide a method of monitoring the position of an operating member which makes a to-and-fro movement which uses apparatus which is compact, relatively inexpensive, and not as susceptible to hostile environments as some known apparatuses.

The invention provides a method of monitoring the position of an operating member which makes a to-and-fro movement, characterised in that the method comprises mounting a magnet adjacent a detection zone which is adjacent to the path of movement of a detection portion of the operating member or a detection member mounted on the operating member, the detection portion or member being made of ferromagnetic but not permanently magnetisable material and having a cross-sectional area which varies along the direction of movement of the operating member, the magnet being mounted so that magnetic flux produced by the magnet passes along a first path between the poles of the magnet through the detection zone, mounting a Hall sensor so that magnetic flux produced by the magnet passes along a second path between the poles of the magnet through the Hall sensor, the arrangement being such that, as the operating member moves, a varying amount of the detection portion or member occupies the detection zone and serves to shunt magnetic flux along the first path so that a reduction occurs in the magnetic flux along the second path, and utilising the output of the Hall sensor to determine the position of the operating member.

In a method in accordance with the last preceding paragraph, magnetic flux travels both through the Hall sensor and also through the detection zone. The presence of ferromagnetic material in the detection zone increases the flux which travels through the detection zone and therefore reduces the flux which travels through the Hall sensor which therefore produces a lower output. The output of the Hall sensor therefore reflects the reduction in the flux therethrough since the Hall sensor depends on the Hall effect, i.e that when a magnetic field is applied perpendicular to a conductor carrying current, a potential difference is observed between points on opposite sides of the conductor, points which in the absence of the field would be at the same potential, the magnitude of the potential difference being proportional to the magnetic field applied. A suitable Hall sensor can be obtained from the West German firm Siemens A.G. under the designation FP210 L100. The magnetic field may be applied by means of a permanent magnet extending between the flux conductors or by means of an electro-magnet.

The first path may be partially defined by magnetic flux conductors made of ferromagnetic but not permanently magnetisable material which are mounted so that they connect opposite ends of the detection zone to opposite poles of the magnet. This concentrates the flux and increases sensitivity.

The second path may be defined by magnetic flux conductors made of ferromagnetic but not permanently magnetisable material which are mounted so that they connect opposite sides of the Hall sensor to opposite poles of the magnet. This concentrates the flux and increases sensitivity.

Where the operating member makes an oscillating movement about an axis, the detection member may be a vane extending normally to the axis and extending different distances from the axis around its periphery so that the output of the Hall sensor is an analogue of the shape of the vane. Alternatively, the detection portion may be a toothed gear having teeth which occupy the detection zone so that the output of the Hall sensor varies in a series of pulses which are counted to determine the position of the operating member.

Where the operating member makes a linear movement, the detection member may be a vane extending in the direction of movement and increasing in cross-sectional area in the direction of movement so that the output of the Hall sensor is an analogue of the shape of the vane. Alternatively, the detection portion may be a toothed rack having teeth which occupy the detection zone so that the output of the Hall sensor varies in a series of pulses which are counted to determine the position of the operating member.

A method in accordance with the invention has the advantages that the apparatus used is inexpensive, relatively compact, and less susceptible to hostile environments than some known apparatuses, and that the position of the operating member can be detected with great accuracy.

There now follows a detailed description, to be read with reference to the accompanying drawings, of two methods of monitoring the position of a operating member which are illustrative of the invention. It is to be understood that the illustrative methods have been selected for description by way of example and not of limitation of the invention.

In the drawings:

Figure 1 is a diagrammatic side-elevational view of an apparatus used in the first illustrative method;

Figure 2 is a plan view of the apparatus shown in Figure 1;

Figure 3 is a diagrammatic side-elevational view of an apparatus used in the second illustrative method; and

Figure 4 is a plan view of the apparatus shown in Figure 3.

The first illustrative method of monitoring the position of an operating member which makes a to-and-fro movement is for monitoring an operating member which makes an oscillating movement about an axis 10. The method comprises mounting two magnetic flux conductors 12 and 14 made of ferromagnetic but not permanently magnetisable material, suitable material being soft iron, or ferrocube (which is a mixture of iron particles in ceramic), so that each conductor 12 and 14 extends between a respective end of a detection zone 16 and a position adjacent a respective side of a Hall sensor 18. The magnetic flux conductors 12 and 14 both consist of an L-shaped bar having one end adjacent the detection zone 16 and the other end adjacent the Hall sensor 18.

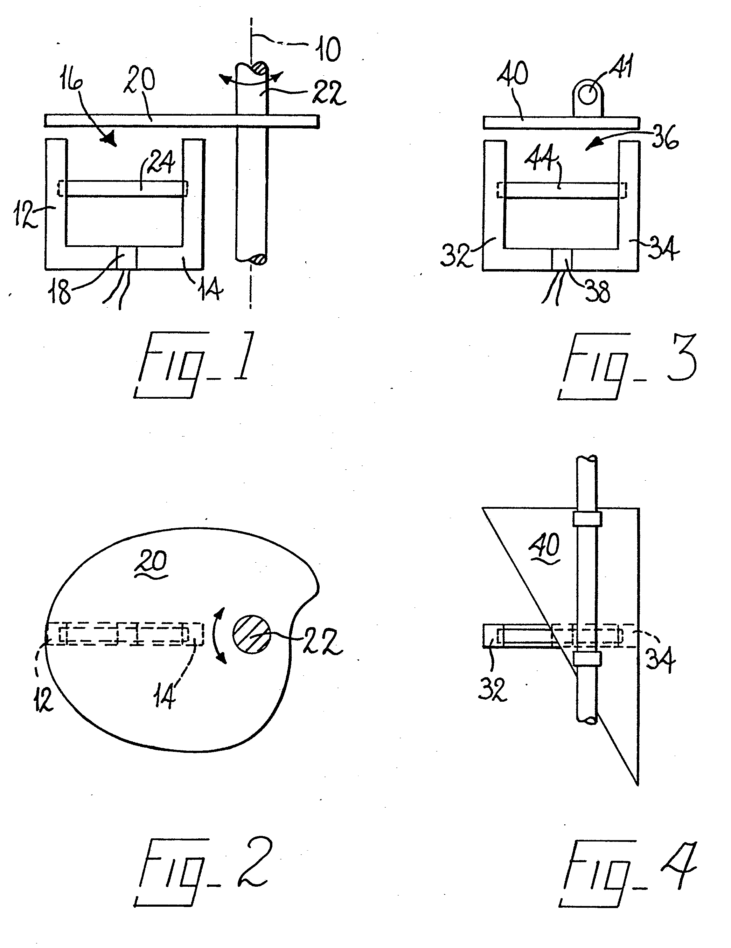

The detection zone 16 is adjacent to the path of movement of a vane 20 mounted on a shaft 22 which extends along the axis 10 and carries the operating member (not shown) the vane 20 forms a detection member mounted on the operating member and is made of ferromagnetic but not permanently magnetisable material similar to the conductors 12 and 14. The vane 20 has a cross-sectional area (see Figure 2) which varies in the direction of movement about the axis 10 of the operating member. The arrangement is such that, as the operating member moves, a varying amount of the vane 20 occupies the detection zone 16 and serves to shunt magnetic flux between the flux conductors 12 and 14.

The first illustrative method also comprises mounting a permanent magnet 24 adjacent to the detection zone 16. The magnet 24 is supported between upright portions of the flux conductors 12 and 14. The magnet 24 is, thus, mounted so that magnetic flux produced thereby passes along a first path between the poles of the magnet through the detection zone 16. The flux passing along the first path is increased by the portions of the conductors 12 and 14 which connect opposite ends of the detection zone 16 to opposite poles of the magnet 24 and serve to partially define the first path. The magnetic flux also passes along a second path through the Hall sensor 18 which is defined by the conductors 12 and 14 which connect opposite sides of the Hall sensor 18 to opposite poles of the magnet 24. Thus, a portion of the magnetic field applied by the magnet 24 passes through the Hall sensor 18 and a portion of the magnetic field passes the detection zone 16.

7.

0164832

As the amount of the vane 20 which is in the detection zone 16 varies, so the amount of flux passing along the first path varies. As an increase in the flux passing along the first path causes a decrease in the flux passing along the second path and vice versa, the output of the Hall sensor 18 can be utilised to determine the position of the vane 20 and therefore of the operating member.

In the first illustrative method, as the detection member is a vane extending normally to the axis 10 and extending different distances from the axis 10 around its periphery, the output of the Hall sensor 18 is an analogue of the shape of the vane 20 the shape of the vane 20 can be varied for different applications and the vane may not occupy the entire 360° about the axis 10 if the oscillatory motion does not occupy the whole 360°.

In a modification of the first illustrative method wherein the operating member comprises a portion of suitable shape and material such as a toothed gear, the portion may be used as a detection portion and the vane 20 omitted. In the case of a toothed gear, the detection zone is arranged so that the teeth of the gear occupy the detection zone so that the output of the Hall sensor varies in a series of pulses as the teeth move through the detection zone and the pulses are counted to determine the position of the operating member.

The second illustrative method is a method of monitoring the position of an operating member which makes a linear to-and-fro movement. The method comprises mounting two magnetic flux conductors 32 and 34 which are similar in shape and construction to the flux conductors 12 and 14 aforementioned so that each conductor 32 and 34 extends between a respective end of a detection zone 36 and a position adjacent a respective side of a Hall sensor 38. The detection zone 36 is adjacent to the path of movement of a vane 40 which forms a detection portion of the operating member 41. The vane 40 is made of similar material to the vane 20 and has a cross-sectional area (see Figure 4) which varies in the direction of movement of the operating member 41. In plan view, as shown in Figure 4, the vane 40 is wedge-shaped. Thus, as the operating member moves, a varying amount of the vane 40 occupies the detection zone 36 and serves to shunt the magnetic flux between the flux conductors 32 and 36.

The second illustrative method also comprises mounting a permanent magnet 44 so that it applies a magnetic field between the flux conductors 32 and 36. The magnet 44 is supported by the conductors 32 and 34 so that a portion of the magnetic field produced thereby passes through the detection zone 36 along a first path and a portion of the magnetic field passes through the Hall sensor 38 along a second path. The arrangement is similar to the first illustrative method and the output of the Hall sensor 38 is utilised to determine the position of the operating member 41 as the output is an analogue of the shape of the vane 40.

In a modification of the second illustrative method wherein the operating member has a portion which is a toothed rack, the toothed rack is used as a detection portion in place of the vane 40 and is arranged so that the teeth on the rack occupy the detection zone 36 so that the output of the Hall sensor 38 varies in a series of pulses as the teeth pass through the zone 36 and the pulses are counted to determine the position of the operating member.

Claims:

1. A method of monitoring the position of an operating member which makes a to-and-fro movement, characterised in that the method comprises mounting a magnet (24; 44) adjacent a detection zone (16; 36) which is adjacent to the path of movement of a detection portion of the operating member or a detection member (20; 40) mounted on the operating member, the detection portion or member being made of ferromagnetic but not permanently magnetisable material and having a cross-sectional area which varies along the direction of movement of the operating member, the magnet being mounted so that magnetic flux produced by the magnet passes along a first path between the poles of the magnet through the detection zone, mounting a Hall sensor (18; 38) so that magnetic flux produced by the magnet passes along a second path between the poles of the magnet through the Hall sensor, the arrangement being such that, as the operating member moves, a varying amount of the detection portion or member occupies the detection zone and serves to shunt magnetic flux along the first path so that a reduction occurs in the magnetic flux along the second path, and utilising the output of the Hall sensor to determine the position of the operating member.

2. A method according to claim 1, characterised in that magnetic flux conductors (12,14; 32,34) made of ferromagnetic but not permanently magnetisable material are mounted so that they connect opposite ends of the detection zone (16; 36) to opposite poles of the magnet (24; 44) and thereby partially define the first path.

3. A method according to either one of claims 1 and 2, characterised in that magnetic flux conductors (12,14; 32,34) made of ferromagnetic but not permanently magnetisable material are mounted so that they connect opposite sides of the Hall sensor (18; 38) to opposite poles of the magnet (24; 44) and thereby define the second path.

4. A method according to any one of claims 1 to 3, characterised in that the operating member makes an oscillating movement about an axis (10), and wherein the detection portion is a toothed gear having teeth which occupy the detection zone so that the output of the Hall sensor (18) varies in a series of pulses which are counted to determine the position of the operating member.

5. A method according to any one of claims 1 to 3, characterised in that the operating member makes an oscillating movement about an axis (10), and wherein the detection member is a vane (20) extending normally to the axis and extending different distances from the axis around its periphery so that the output of the Hall sensor (18) is an analogue of the shape of the vane.

6. A method according to any one of claims 1 to 3, characterised in that the operating member makes a linear movement, and wherein the detection portion is a toothed rack having teeth which occupy the detection zone so that the output of the Hall sensor (38) varies in a series of pulses which are counted to determine the position of the operating member.

7. A method according to any one of claims 1 to 3, characterised in that the operating member makes a linear movement, and wherein the detection member is a vane (40) extending in the direction of movement and increasing in cross sectional area in the direction of movement so that the output of the Hall sensor (38) is an analogue of the shape of the vane.

0164832

Fig_1

Fig_2

Fig_3

Fig_4

# EUROPEAN SEARCH REPORT

| | DOCUMENTS CONSIDERED TO BE RELEVANT | | EP 85302246.5 | |
|---|---|---|---|---|

| Category | Citation of document with indication. where appropriate, of relevant passages | Relevant to claim | CLASSIFICATION OF THE APPLICATION (Int Cl 4) |
|---|---|---|---|
| X | <u>FR - A1 - 2 493 981</u> (PRECISION). <br> * Totality * | 1,2,3, 5 | G 01 B 7/00 |
| X <br> Y | <u>FR - A1 - 2 368 830</u> (BOSCH) <br> * Totality * | 1,2,3 <br> 5 | |
| Y | <u>GB - A - 2 054 160</u> (BOSCH) <br> * Fig. 1 * | 5 | |
| X | <u>DE - A1 - 2 855 635</u> (BOSCH) <br> * Totality * | 1,2,3 | |
| X | <u>DE - B - 1 268 399</u> (SIEMENS) <br> * Totality * | 1,4 | |
| X | <u>FR - A1 - 2 506 006</u> (FUJI) <br> * Page 2, line 33 - page 3, line 27; fig. 1,2 * | 1,6 | **TECHNICAL FIELDS SEARCHED (Int. Cl.4)** <br><br> G 01 B 7/00 |

The present search report has been drawn up for all claims

| Place of search <br> VIENNA | Date of completion of the search <br> 20-08-1985 | Examiner <br> TOMASELLI |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82